# EUROPEAN PATENT SPECIFICATION

(11) **EP 2 857 441 B1**
(45) Date of publication and mention of the grant of the patent: **07.10.2020**
(21) Application number: 13194797.0
(22) Date of filing: 28.11.2013
(51) Int. Cl.: C08J 5/22, B01D 61/42, C02F 1/469, F03G 7/00, H01M 14/00

(54) **Ion exchange membrane used in reverse electrodialysis device and reverse electrodialysis device including this membrane**
Ionenaustauschermembran verwendet in eine Vorrichtung für umgekehrte Elektrodialyse und eine Vorrichtung für umgekehrte Elektrodialyse mit diesem Membran
Membrane d'échange d'ions utilisée dans un dispositif d'électrodialyse inverse et dispositif d'électrodialyse inverse comprenant cette membrane.

(30) Priority: 24.09.2013 KR 20130113111
(43) Date of publication of application: 08.04.2015
(73) Proprietor: Toray Advanced Materials Korea Inc., Gumi-si, Gyeongsangbuk-do 39389 (KR)
(72) Inventor: Choi, Young-Woo, Cheongju (KR); Lee, Mi-Soon, Daejeon (KR); Yang, Tae-Hyun, Daejeon (KR); Yoon, Young-Gi, Daejeon (KR); Park, Seok-Hee, Daejeon (KR); Yang, Hyun-Kyung, Jeju-Si (KR); Kim, Han-Gi, Jeju-Si (KR); Kim, Tae-Hwan, DAEJEON (KR); Park, Jong-Soo, DAEJEON (KR)
(74) Representative: EP&C

(56) References cited:
- WO-A1-2009/131294
- WO-A1-2011/073637
- WO-A1-2011/073638
- WO-A1-2011/073641
- WO-A1-2013/011272
- WO-A1-2013/153360
- US-A- 5 264 125
- US-A1- 2008 216 942
- SANDIP MAURYA ET AL: "Stability of composite anion exchange membranes with various functional groups and their performance for energy conversion", JOURNAL OF MEMBRANE SCIENCE, vol. 443, 1 September 2013 (2013-09-01), pages 28-35, XP055169661, ISSN: 0376-7388, DOI: 10.1016/j.memsci.2013.04.035
- POST ET AL: "Salinity-gradient power: Evaluation of pressure-retarded osmosis and reverse electrodialysis", JOURNAL OF MEMBRANE SCIENCE, ELSEVIER, vol. 288, no. 1-2, 3 February 2007 (2007-02-03), pages 218-230, XP005872394, ISSN: 0376-7388, DOI: 10.1016/J.MEMSCI.2006.11.018
- Joost Veerman ET AL: "Electrical Power from Sea and River Water by Reverse Electrodialysis: A First Step from the Laboratory to a Real Power Plant", Environ. Sci. Technol., 1 January 2010 (2010-01-01), pages 9207-9212, XP055682021,
- HAN-KI KIM ET AL: "High power density of reverse electrodialysis with pore-filling ion exchange membranes and a high-open-area spacer", J. MATER. CHEM. A, vol. 3, 1 January 2015 (2015-01-01), pages 16302-16306, XP55682205,

## Description

### BACKGROUND OF THE INVENTION

### 1. Field of the Invention

The present invention relates to an ion exchange membrane for a reverse electrodialysis device and a reverse electrodialysis device including the same.

### 2. Description of the Related Art

Due to concerns about depletion of fossil fuels such as oil, coal, etc. and problems of global warming caused by generation of carbon dioxide resulting from using fossil fuels, development of novel energy sources able to replace such fuels is required. In regard thereto, research and development into a variety of renewable energy sources, such as solar energy, biofuel, geothermal energy, wind energy, etc. is ongoing these days all over the world, but such renewable energy sources are still less than 10% of global energy consumption.

Furthermore, solar energy and wind energy which are under study as promising alternative energy sources of fossil fuels are disadvantageous in terms of stably ensuring energy production because the amount of produced energy varies greatly depending on the surrounding climate. Hence, high interest is taken in eco-friendly alternative energy sources able to stably produce energy without depletion concerns.

In this respect, power generation techniques using reverse electrodialysis (RED) are receiving attention. Reverse electrodialysis is a clean energy technique for generating power using a difference in salinity between sea water and fresh water, and is advantageous because energy is obtained via a reverse process of desalination using electrodialysis contrary to a typical electrodialysis process for generating a difference in electrolyte concentration by supplying electric power, and also because power may be generated regardless of climate conditions, time, etc., unlike other renewable energy sources such as wind energy, solar energy, etc.

Despite the advantages as above, however, a reverse electrodialysis system is difficult to commercialize because of high price of ion exchange membranes contained therein.

Examples of ion exchange membranes can be found in WO 2011/073641 and WO 2011/073638.

With the goal of commercializing the reverse electrodialysis technique, there is an urgent need to develop ion exchange membranes having lower electrical resistance to thus remarkably improve power density, compared to conventional commercial ion exchange membranes, so that the inner stack resistance of a reverse electrodialysis system may be minimized and the total power production may be maximized.

### SUMMARY OF THE INVENTION

Accordingly, the present invention has been made keeping in mind the above problems encountered in the related art, and an object of the present invention is to provide a cation exchange membrane and an anion exchange membrane, a manufacturing method thereof, and a reverse electrodialysis device including the cation exchange membrane and/or the anion exchange membrane, wherein when such cation and anion exchange membranes having excellent ion conductivity are applied to a reverse electrodialysis system, power production may be considerably improved compared to conventional commercial ion exchange membranes, and also, such cation and anion exchange membranes enable stable operation of a reverse electrodialysis device thanks to superior water resistance and heat resistance thereof.

In order to accomplish the above object, the present invention provides a cation exchange membrane for a reverse electrodialysis (RED) device, including a porous polymer substrate; and a polymer electrolyte incorporated into pores of the porous polymer substrate.

Also, the porous polymer substrate may be a porous hydrocarbonaceous film having a pore volume of 30 ∼ 70%, a pore size of 0.05 ∼ 0.1 µm and a thickness of 10 ∼ 55 µm.

Also, the polymer electrolyte may be formed by incorporating a solution including a crosslinkable aromatic polymer represented by Chemical Formula 1 below, a monomer having an aliphatic or aromatic ring with a vinyl group linked thereto, and an initiator into the porous polymer substrate and then performing crosslinking polymerization: 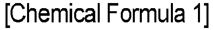 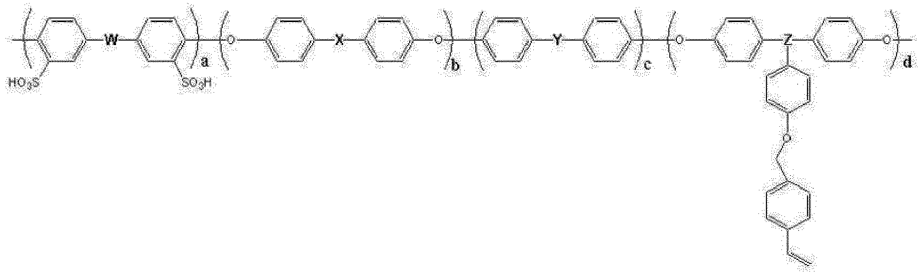 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c= b + d.

Furthermore, the monomer having an aliphatic or aromatic ring with a vinyl group linked thereto may be a vinylpyrrolidone monomer, a styrene monomer or a divinylbenzene monomer.

Also, the polymer electrolyte may be formed by incorporating a solution including a crosslinkable aromatic polymer represented by Chemical Formula 2 below into the porous polymer substrate and then performing crosslinking polymerization: 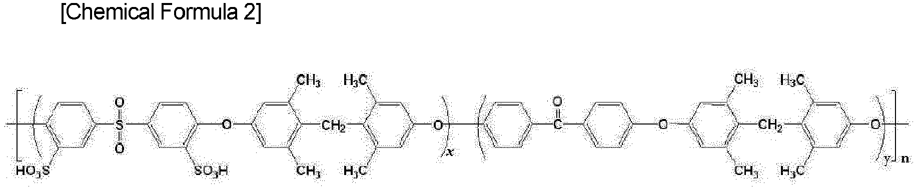 wherein x and y are greater than 0, x + y = 1, and n is an integer of 1 or more.

Also, the polymer electrolyte may be formed by incorporating a solution including a styrene-based monomer, vinylpyrrolidone, a crosslinking agent and an initiator into the porous polymer substrate and then performing crosslinking polymerization.

Furthermore, the styrene-based monomer may be one or more selected from the group consisting of alpha-methylstyrene, styrene and trifluorostyrene.

Furthermore, the crosslinking agent may be divinylbenzene, methylenebisacrylamide or tetramethylenebisacrylamide.

Furthermore, the initiator may be N,N'-azobisisobutyronitrile (AIBN), benzoyl peroxide (BPO) or cumyl peroxide.

In addition, the present invention provides a method of manufacturing the cation exchange membrane for a reverse electrodialysis device as above, including (a) impregnating a porous polymer substrate with (i) a solution including a crosslinkable aromatic polymer represented by Chemical Formula 1 below, a monomer having an aliphatic or aromatic ring with a vinyl group linked thereto, and an initiator, (ii) a solution including a crosslinkable aromatic polymer represented by Chemical Formula 2 below, or (iii) a solution including a styrene-based monomer, vinylpyrrolidone, a crosslinking agent and an initiator; and (b) applying heat or light to the porous polymer substrate impregnated with the solution as obtained in (a), thus forming a polymer electrolyte crosslinking polymerized in the porous polymer substrate: 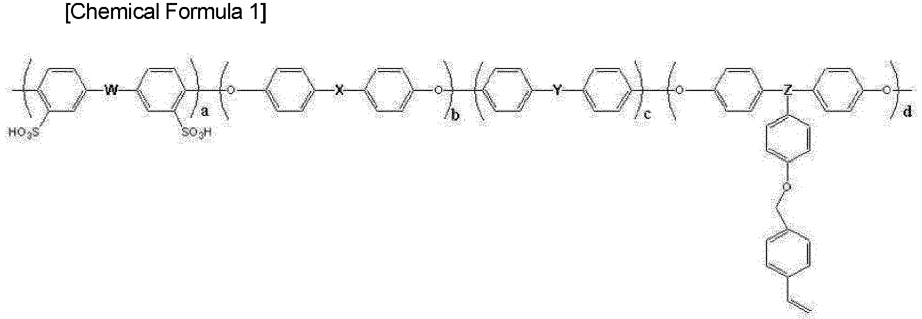 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c= b + d, 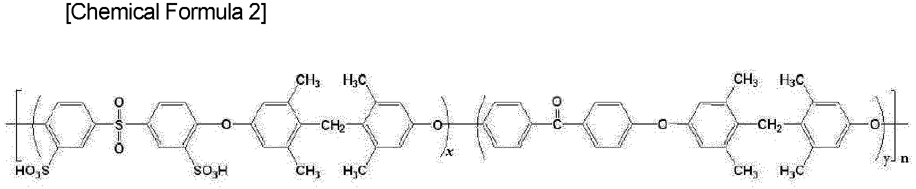 wherein x and y are greater than 0, x + y = 1, and n is an integer of 1 or more.

Also, the polymer substrate in (a) may be hydrophilized with sulfone or a surfactant.

Also, (b) may be performed under a condition in which a polyethyleneterephthalate (PET) film is formed on one side and the other side of the porous polymer substrate impregnated with the solution.

In addition, the present invention provides an anion exchange membrane for a reverse electrodialysis (RED) device, including a porous polymer substrate; and a polymer electrolyte incorporated into pores of the porous polymer substrate.

Also, the porous polymer substrate may be a porous hydrocarbonaceous film having a pore volume of 30 ∼ 70%, a pore size of 0.05 ∼ 0.1 µm and a thickness of 10 ∼ 55 µm.

Also, the polymer electrolyte may be formed by incorporating a solution including an electrolyte monomer of a quaternary ammonium salt having a cationic group, a crosslinking agent and an initiator into the porous polymer substrate and then performing crosslinking polymerization.

Furthermore, the electrolyte monomer of a quaternary ammonium salt having a cationic group may be (3-acrylamidopropyl)trimethylammonium chloride or (vinylbenzyl)trimethylammonium chloride.

Furthermore, the crosslinking agent may be (i) a bisacrylamide-based crosslinking agent or (ii) triazine substituted with a (meth)acryloyl group or an alkenyl group.

Moreover, the bisacrylamide-based crosslinking agent may be one or more selected from the group consisting of N,N'-ethylenebisacrylamide, N,N'-methylenebisacrylamide, N,N'-methylenebismethacrylamide and N,N'-bisacryloylpiperazine.

Moreover, the triazine substituted with a (meth)acryloyl group may be 1,3,5-triacryloylhexahydro-1,3,5-triazine.

Also, the crosslinking agent may be Doracure® series available from Ciba Geigy, Irgacure® series available from Ciba Geigy, or 2-hydroxy-2-methyl-1-phenylpropan-1-one.

In addition, the present invention provides a method of manufacturing the anion exchange membrane for a reverse electrodialysis device as above, including (a) impregnating a porous polymer substrate with a solution including an electrolyte monomer of a quaternary ammonium salt having a cationic group, a crosslinking agent and an initiator; and (b) applying heat or light to the porous polymer substrate impregnated with the solution as obtained in (a), thus forming a polymer electrolyte polymerized in the porous polymer substrate.

Also, the polymer substrate in (a) may be hydrophilized with sulfone.

In addition, the present invention provides a reverse electrodialysis device, including an anode; a cathode; and one or more single cells spaced apart from each other between the anode and the cathode so as to form a flow path through which fresh water flows, wherein the single cells each include the cation exchange membrane as above and the anion exchange membrane as above, which are spaced apart from each other so as to form a flow path through which sea water flows.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a schematic cross-sectional view illustrating a reverse electrodialysis device according to an embodiment of the present invention;
FIGS. 2A and 2B are optical camera images illustrating changes in the cation exchange membrane of Example 1 during crosslinking polymerization; and
FIG. 3 is a graph illustrating the results of measurement of power density of the reverse electrodialysis cells of Example 3 and Comparative Example.

### DESCRIPTION OF SPECIFIC EMBODIMENTS

Hereinafter, a detailed description will be given of the present invention.

According to the present invention, a cation exchange membrane for a reverse electrodialysis (RED) device includes a porous polymer substrate and a polymer electrolyte incorporated into pores of the porous polymer substrate.

The porous polymer substrate may be a porous hydrocarbonaceous film having a pore volume of 30 ∼ 70%, a pore size of 0.05 ∼ 0.1 µm and a thickness of 10 ∼ 55 µm, and specific examples of the material thereof may include polyethylene, polypropylene, polyimide, polyamideimide, polypropyleneoxide, polyethersulfone, polyurethane, etc.

The pores of the porous polymer substrate are impregnated with the polymer electrolyte, and the polymer electrolyte may be formed in the pores of the porous polymer substrate by incorporating a solution including a monomer, etc. into the porous polymer substrate and then performing crosslinking polymerization via thermal crosslinking or optical crosslinking.

More specifically, the cation exchange membrane for a reverse electrodialysis device according to the present invention may be manufactured using a method including (a) impregnating a porous polymer substrate with (i) a solution including a crosslinkable aromatic polymer represented by Chemical Formula 1 below, a monomer having an aliphatic or aromatic ring with a vinyl group linked thereto, and an initiator, (ii) a solution including a crosslinkable aromatic polymer represented by Chemical Formula 2 below, or (iii) a solution including a styrene-based monomer, vinylpyrrolidone, a crosslinking agent and an initiator: 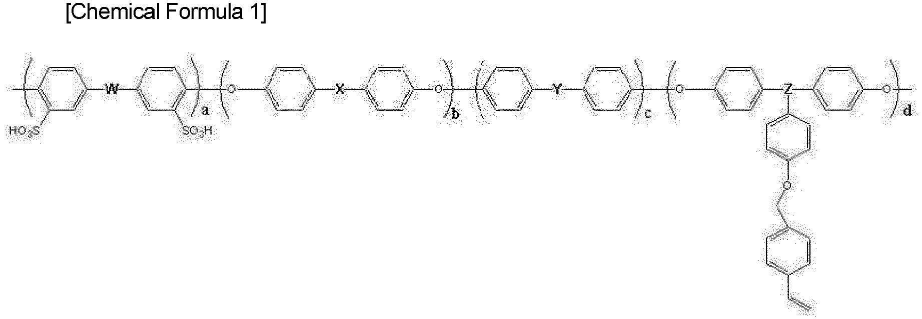 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c= b + d, 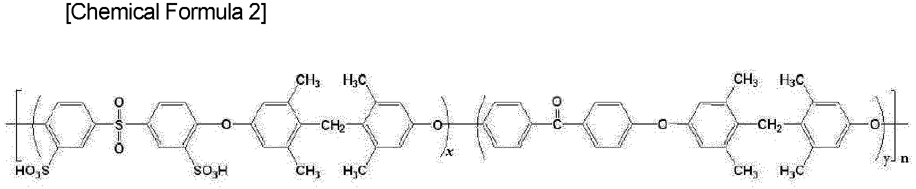 wherein x and y are greater than 0, x + y = 1, and n is an integer of 1 or more; and (b) applying heat or light to the porous polymer substrate impregnated with the solution as obtained in (a), thus forming a polymer electrolyte crosslinking polymerized in the porous polymer substrate.

In the method of manufacturing the cation exchange membrane for a reverse electrodialysis device according to the present invention, step (a) is a process of impregnating the porous polymer substrate with any one solution selected from among the solutions (i) to (iii) before crosslinking polymerization in subsequent step (b). These solutions (i) to (iii) are specified below.

The solution (i) may be obtained by dissolving a crosslinkable aromatic polymer represented by Chemical Formula 1, a monomer having an aliphatic or aromatic ring with a vinyl group linked thereto, and an initiator in a polar solvent. Specific examples of the monomer having an aliphatic or aromatic ring with a vinyl group linked thereto may include a vinylpyrrolidone monomer, a styrene monomer, a divinylbenzene monomer, etc., and specific examples of the polar solvent may include dimethylacetamide, nitromethylpyrrolidone, dimethylsulfoxide, etc.

The solution (ii) may be obtained by dissolving a crosslinkable aromatic polymer represented by Chemical Formula 2 in a polar solvent, and specific examples of the polar solvent may include dimethylacetamide, nitromethylpyrrolidone, dimethylsulfoxide, dimethylfluoride, etc.

The solution (iii) is a solution including a styrene-based monomer, vinylpyrrolidone, a crosslinking agent and an initiator. This solution may include 60 ∼ 90 wt% of the styrene-based monomer, 5 ∼ 20 wt% of vinylpyrrolidone and 5 ∼ 20 wt% of the crosslinking agent, and based on 100 parts by weight of the styrene-based monomer, the initiator may be used in an amount of 0.2 ∼ 1 parts by weight. As such, if the amount of vinylpyrrolidone is less than 5 wt%, it is lacking in ensuring water content able to improve ion conductivity. In contrast, if the amount thereof exceeds 20 wt%, ion exchange capacity of the membrane may decrease. Also, if the amount of the crosslinking agent is less than 5 wt%, crosslinkability becomes poor. In contrast, if the amount thereof exceeds 20 wt%, crosslinkability may become too high, undesirably decreasing conductivity of the membrane.

The kind of styrene-based monomer is not particularly limited, but preferably includes one or more selected from among alpha-methylstyrene, styrene and trifluorostyrene. Also, the kind of crosslinking agent is not particularly limited, but preferably includes any one selected from among divinylbenzene, methylenebisacrylamide, and tetramethylenebisacrylamide. Also, the kind of initiator is not particularly limited, but preferably includes any one selected from among N,N'-azobisisobutyronitrile (AIBN), benzoyl peroxide (BPO) and cumyl peroxide.

Meanwhile, the surface and the inner pores of the polymer substrate provided in step (a) may be subjected to hydrophilization treatment, before impregnation with any one selected from among the solutions (i) to (iii), in order to increase the filling factor of the solution into the pores or promote crosslinking polymerization in subsequent step (b).

As such, the specific method for hydrophilization treatment is not particularly limited, and may include, for example, hydrophilization with sulfone or a surfactant.

In the case of hydrophilization with sulfone, hydrophilization pretreatment may be carried out in such a manner that the porous polymer substrate is immersed in a solution comprising 98% or more sulfuric acid and 96% or more chlorosulfuric acid mixed at a weight ratio of 1:1 ∼ 3:1 and thus allowed to react at 30 ∼ 60°C for 2 ∼ 5 hr, and preferably 45 ∼ 50°C for 3 ∼ 4 hr, followed by cleaning for one day or longer using a 1 ∼ 3N sodium hydroxide solution.

On the other hand, in the case of hydrophilization with a surfactant, the porous polymer substrate may be immersed in a surfactant solution, and thus the surface of the pores thereof may be hydrophilized. As such, any surfactant may be used without particular limitation so long as the porous polymer substrate is hydrophilized therewith. Preferably useful is a non-ionic surfactant.

In the method of manufacturing the cation exchange membrane for a reverse electrodialysis device according to the present invention, step (b) is a process of applying heat or light to the porous polymer substrate impregnated with the solution as obtained in step (a) to perform thermal crosslinking or optical crosslinking, thus forming the polymer electrolyte crosslinking polymerized in the porous polymer substrate. Taking into consideration the composition of the solutions (i) to (iii) specified above, crosslinkability, thermal stability of the substrate, etc., thermal crosslinking or optical crosslinking may be conducted under appropriate crosslinking conditions (temperature for thermal polymerization, light irradiation energy for optical crosslinking, crosslinking polymerization atmosphere, etc.).

Also, this step may be carried out under a condition in which a polymer film such as a polyethyleneterephthalate (PET) film is formed on one side and the other side of the porous polymer substrate impregnated with the above solution. In this case, after completion of the present step, the polymer film is removed from the porous polymer substrate.

In addition, below is a description of an anion exchange membrane for a reverse electrodialysis (RED) device according to the present invention.

The anion exchange membrane for a reverse electrodialysis (RED) device according to the present invention may include a porous polymer substrate and a polymer electrolyte incorporated into the pores of the porous polymer substrate.

The porous polymer substrate is a porous hydrocarbonaceous film having a pore volume of 30 ∼ 70%, a pore size of 0.05 ∼ 0.1 *µ*m and a thickness of 10 ∼ 55 *µ*m, and specific examples of the material thereof may include polyethylene, polypropylene, polyimide, polyamideimide, polypropyleneoxide, polyethersulfone, polyurethane, etc.

The pores of the porous polymer substrate are impregnated with the polymer electrolyte, and the polymer electrolyte may be formed in the pores of the porous polymer substrate by incorporating the solution including a monomer, etc. into the porous polymer substrate and then performing crosslinking polymerization via thermal crosslinking or optical crosslinking.

More specifically, the anion exchange membrane for a reverse electrodialysis (RED) device according to the present invention may be manufactured using a method including (a) impregnating a porous polymer substrate with a solution including an electrolyte monomer of a quaternary ammonium salt having a cationic group, a crosslinking agent and an initiator; and (b) applying heat or light to the porous polymer substrate impregnated with the solution as obtained in (a), thus forming a polymer electrolyte crosslinking polymerized in the porous polymer substrate.

In the method of manufacturing the anion exchange membrane for a reverse electrodialysis device according to the present invention, step (a) is a process of impregnating the porous polymer substrate with the solution including the electrolyte monomer of a quaternary ammonium salt having a cationic group, the crosslinking agent and the initiator, before crosslinking polymerization in subsequent step (b).

As for the solution, specific examples of the electrolyte monomer of a quaternary ammonium salt having a cationic group may include, but are not limited to, (3-acrylamidopropyl)trimethylammonium chloride, (vinylbenzyl)trimethylammonium chloride, etc.

The crosslinking agent is preferably a bisacrylamide-based crosslinking agent or triazine substituted with a (meth)acryloyl group or an alkenyl group. In the case where the bisacrylamide-based crosslinking agent is used, it may include, but is not limited to, one or more selected from among N,N'-ethylenebisacrylamide, N,N'-methylenebisacrylamide, N,N'-methylenebismethacrylamide and N,N'-bisacryloylpiperazine. Useful as the triazine substituted with a (meth)acryloyl group is 1,3,5-triacryloylhexahydro-1,3,5-triazine.

The initiator may include, but is not limited to, a photoinitiator, such as any one selected from among Doracure® and Irgacure® series available from Ciba Geigy, Switzerland, or 2-hydroxy-2-methyl-1-phenylpropan-1-one.

The solvent used to form the solution may include any known solvent typically used in the art, and may include, for example, water or a solvent mixture of water and a polar solvent (dimethylformamide, dimethylacetamide, nitromethylpyrrolidone, dimethylsulfoxide, dimethylfluoride, etc.).

Also, the solution may have a composition of (i) 100 parts by weight of an initiator-free solution comprising 48 ∼ 86 parts by weight of the electrolyte monomer of a quaternary ammonium salt, 2 ∼ 4 parts by weight of the bisacrylamide-based crosslinking agent and 10 ∼ 50 parts by weight of the solvent, and 0.1 ∼ 0.5 parts by weight of the initiator, or of (ii) 100 parts by weight of an initiator-free solution comprising 60 ∼ 75 parts by weight of the electrolyte monomer of a quaternary ammonium salt, 5 ∼ 16 parts by weight of triazine substituted with a (meth)acryloyl group and 20 ∼ 25 parts by weight of the solvent, and 0.5 ∼ 2 parts by weight of the initiator.

The surface and the inner pores of the polymer substrate provided in step (a) may be subjected to hydrophilization treatment, before impregnation with the above solution, in order to increase the filling factor of the solution into the pores or promote crosslinking polymerization in subsequent step (b).

As such, the specific method for hydrophilization treatment is not particularly limited, and may include, for example, hydrophilization with sulfone.

In the case of hydrophilization with sulfone, hydrophilization pretreatment may be performed in such a manner that the porous polymer substrate is immersed in a solution comprising 98% or more sulfuric acid and 96% or more chlorosulfuric acid mixed at a weight ratio of 1:1 ∼ 3:1 and thus allowed to react at 30 ∼ 60°C for 2 ∼ 5 hr, and preferably 45 ∼ 50°C for 3 ∼ 4 hr, followed by cleaning for one day or longer using a 1 ∼ 3N sodium hydroxide solution.

In the method of manufacturing the anion exchange membrane for a reverse electrodialysis device according to the present invention, step (b) is a process of applying heat or light to the porous polymer substrate impregnated with the solution as obtained in step (a) to perform thermal crosslinking or optical crosslinking, thus forming the polymer electrolyte crosslinking polymerized in the porous polymer substrate. In consideration of the composition of the solution specified above, crosslinkability, thermal stability of the substrate, etc., thermal crosslinking or optical crosslinking may be conducted under appropriate crosslinking conditions (temperature for thermal polymerization, light irradiation energy for optical crosslinking, crosslinking polymerization atmosphere, etc.).

Furthermore, this step may be carried out under a condition in which a polymer film such as a PET film is formed on one side and the other side of the porous polymer substrate impregnated with the solution. In this case, after completion of the present step, the polymer film is removed from the porous polymer substrate.

Below is a description of a reverse electrodialysis device including the cation and anion exchange membranes as above.

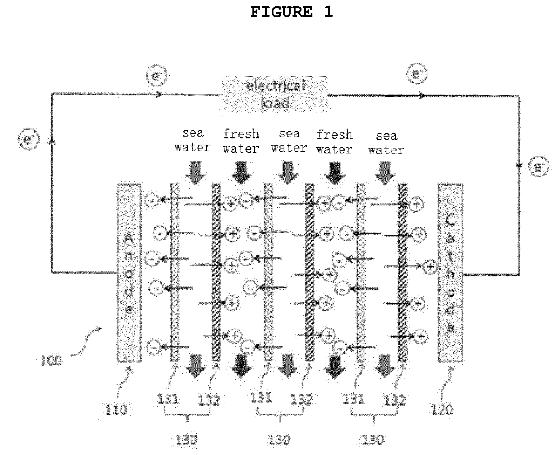

FIG. 1 schematically illustrates a reverse electrodialysis device according to an embodiment of the present invention. As illustrated in FIG. 1, the reverse electrodialysis device 100 according to the present invention includes an anode 110; a cathode 120; and one or more single cells 130 spaced apart from each other between the anode and the cathode so as to form a flow path through which fresh water flows, wherein the single cells each may include a cation exchange membrane 132 and an anion exchange membrane 131 spaced apart from each other so as to form a flow path through which sea water flows.

When briefly describing the principle of operation of the reverse electrodialysis device according to the present invention, when fresh water and sea water are allowed to alternately flow into flow paths defined between the ion exchange membranes by alternately disposing cation exchange membranes and anion exchange membranes to be spaced apart from each other, cations and anions present in sea water are moved toward fresh water through the cation exchange membranes and the anion exchange membranes, respectively, due to a difference in concentration between fresh water and sea water. Accordingly, a difference in potential occurs between the electrodes at both ends of the reverse electrodialysis device, and electrical energy is produced via oxidation-reduction occurring at the electrodes.

The reverse electrodialysis device according to the present invention may further include, in addition to the above-mentioned members, a spacer for forming a flow path (for flow of an electrode rinse solution) between the anode (or cathode) and the ion exchange membrane adjacent thereto, a flow path (for flow of fresh water) between the single cells, or a flow path (for flow of sea water) between the cation exchange membrane and the anion exchange membrane in the single cell. As such, the spacer is preferably made of a material having ion permeability and electrical insulation properties.

A better understanding of the present invention may be obtained through the following examples which are set forth to illustrate, but are not to be construed as limiting the present invention, and do not fall under the scope of the present claims.

### <Example 1> Formation of cation exchange membrane for reverse electrodialysis device

95% or more high-concentration anhydrous vinylsulfonic acid and N,N'-ethylenebisacrylamide were mixed at a ratio of 80:20 by parts by weight and stirred, thus preparing a mixed solution, and as an initiator, Darocur® 1173 diluted in 10 parts by weight in methanol was added in an amount of 1 part by weight based on 100 parts by weight of the mixed solution.

Subsequently, the resulting solution was incorporated into a polyethylene porous support having a film thickness of 25 µm, a pore size of 0.07 µm and a pore distribution of 45% in which the surface of pores thereof had been subjected to hydrophilization by immersing the support for 1 ∼ 2 min in a solution of a commercially available surfactant (dodecylbenzenesulfonic acid, DBSA) diluted in 0.5 ∼ 1 parts by weight in water and then drying it. Thereby, the inside of the support was sufficiently impregnated with the monomer solution, after which the support was placed between PET films, and irradiated with UV at a dose of 150 mJ/cm².

After the crosslinking process as above, the PET films were removed, impurities were removed from the surface of the obtained composite membrane so that the surface was made uniform, and the membrane was washed several times with ultrapure water, finally manufacturing a cation exchange membrane for a reverse electrodialysis device.

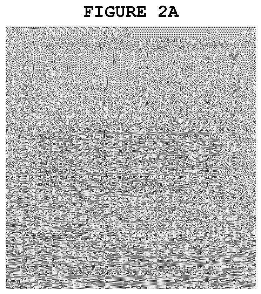

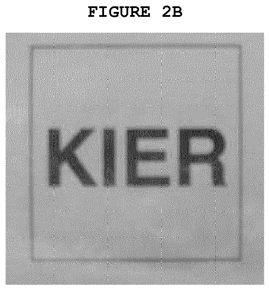

For reference, FIG. 2A illustrates the outer appearance of the porous polymer substrate before crosslinking polymerization in the present example, and FIG. 2B illustrates the outer appearance of the final cation exchange membrane after crosslinking polymerization through the present example. From this, it can be seen that the transparent cation exchange membrane was obtained via crosslinking polymerization.

### <Example 2> Formation of anion exchange membrane for reverse electrodialysis device

(Vinylbenzyl)trimethylammonium chloride, 1,3,5-triacryloylhexahydro-1,3,5-triazine, and a solvent mixture of deionized water and dimethylformamide at a weight ratio of 1:1 were mixed at a weight ratio of 61.5:15.4:23.1 with stirring, thus preparing a mixed solution, and 1 part by weight of 2-hydroxy-2-methyl-1-phenyl-1-one diluted in 10 wt% in methanol as a photoinitiator was mixed based on 100 parts by weight of the mixed solution.

Subsequently, the resulting solution was incorporated into a polyolefin-based porous support having a film thickness of 25 µm, an average pore size of 0.07 µm and a pore distribution of 45%, so that the support was sufficiently impregnated with the monomer solution. Subsequently, the resulting membrane impregnated with the electrolyte was placed between PET films and then irradiated with UV at a dose of 30 ∼ 150 mJ/cm².

After the crosslinking process as above, the PET films were removed, impurities were removed from the surface of the obtained composite membrane so that the surface was made uniform, and the composite membrane was washed several times with ultrapure water, giving a polymer composite membrane. Then, this membrane was placed in a 2N sodium hydroxide solution so that CI- ions were substituted with OH- ions to sufficiently ensure hydroxide ion conductivity, finally manufacturing an anion exchange membrane for a reverse electrodialysis device.

### <Example 3> Formation of reverse electrodialysis cell including the ion exchange membranes of Examples 1 and 2

Between an anode and a cathode (10 cm × 10 cm, effective area 0.0071 m²) formed by polishing a graphite electrode, the anion exchange membrane of Example 2 and the cation exchange membrane of Example 1 were spaced apart from each other by a spacer, and to ensure a flow path through which an electrode rinse solution (50mM Fe(CN)6^{3+/4+} aqueous solution and 0.5M Na₂SO₄ aqueous solution) could flow, a woven mesh type electrode spacer (thickness 200 µm) and a silicon gasket were provided, thus manufacturing a reverse electrodialysis (RED) cell.

### <Comparative Example> Formation of reverse electrodialysis cell including commercial ion exchange membranes

A reverse electrodialysis cell was manufactured in the same manner as in Example 3, with the exception that as the cation exchange membrane, a commercial cation exchange membrane under brand name of ASTOM Neosepta® CMX, and as the anion exchange membrane, a commercial anion exchange membrane under brand name of ASTOM Neosepta® AMX were used.

### <Test Example> Measurement of maximum power density of the reverse electrodialysis cells of Example 3 and Comparative Example

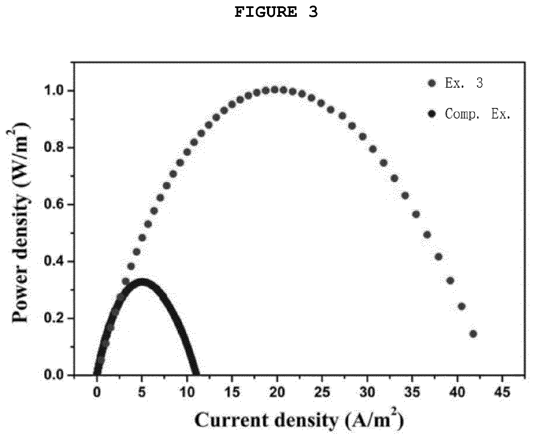

As for each of the reverse electrodialysis cells of Example 3 and Comparative Example, an electrode rinse solution was allowed to flow in a closed cycle through the anode and the cathode at a flow rate of 80 mL/min using a peristatic pump. While brackish water corresponding to 3.0% (W/W, 0.5M, 45 ∼ 50 mS/cm) sea water using sodium chloride (99%) and tap water (150 ∼ 200 uS/cm) as fresh water were fed to the cells at flow rates of 50 mL/min and 30 mL/min, respectively, power of the cells was measured. The results of power density are graphed in FIG. 3.

As illustrated in FIG. 3, the reverse electrodialysis cell of Comparative Example had a power density of 0.33 W/m² per area of the ion exchange membrane, whereas the reverse electrodialysis cell of Example 3 had a power density of 0.89 W/m² per area of the ion exchange membrane, which is evaluated to be about three times the power density of Comparative Example.

As is apparent from the above results, in the case where the cation and anion exchange membranes according to the above examples 1 and 2 are employed in a reverse electrodialysis device, membrane resistance of the ion exchange membranes may be minimized thanks to superior ion conductivity thereof, and thereby, maximum power density of the reverse electrodialysis device may be considerably improved.

As described hereinbefore, the present invention provides an ion exchange membrane for a reverse electrodialysis device and a reverse electrodialysis device including the same. According to the present invention, cation and anion exchange membranes for a reverse electrodialysis device have superior ion conductivity and thus can minimize membrane resistance, thereby remarkably improving maximum power density of the reverse electrodialysis device, and also have high water resistance and heat resistance, making it possible to stably operate the reverse electrodialysis device.

## Claims

1. A reverse electrodialysis device, comprising:
an anode;
a cathode; and
one or more single cells spaced apart from each other between the anode and the cathode so as to form a flow path through which fresh water flows,
wherein the single cells each include a cation exchange membrane and an anion exchange membrane, which are spaced apart from each other so as to form a flow path through which sea water flows, wherein
the cation and anion exchange membranes comprise a porous polymer substrate and a polymer electrolyte incorporated into pores of the porous polymer substrate, and wherein the polymer electrolyte in the cation exchange membrane is formed by incorporating a solution including a crosslinkable aromatic polymer represented by Chemical Formula 1 below, a monomer having an aliphatic or aromatic ring with a vinyl group linked thereto preferably selected from a vinylpyrrolidone monomer, a styrene monomer or a divinylbenzene monomer, and an initiator into the porous polymer substrate and then performing crosslinking polymerization: 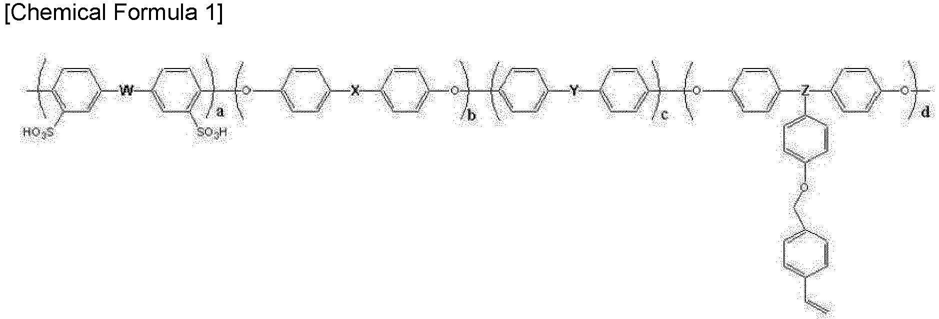 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c = b + d.

2. A reverse electrodialysis device, comprising:
an anode;
a cathode; and
one or more single cells spaced apart from each other between the anode and the cathode so as to form a flow path through which fresh water flows,
wherein the single cells each include a cation exchange membrane and an anion exchange membrane, which are spaced apart from each other so as to form a flow path through which sea water flows, wherein
the cation and anion exchange membranes comprise a porous polymer substrate and a polymer electrolyte incorporated into pores of the porous polymer substrate, and wherein the polymer electrolyte in the cation exchange membrane is formed by incorporating a solution including a crosslinkable aromatic polymer represented by Chemical Formula 2 below into the porous polymer substrate and then performing crosslinking polymerization: 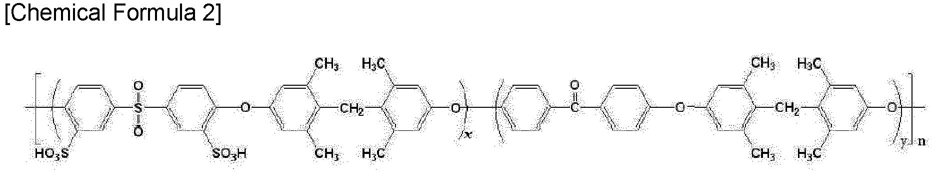 wherein x and y are greater than 0, x + y = 1, and n is an integer of 1 or more.

3. A reverse electrodialysis device, comprising:
an anode;
a cathode; and
one or more single cells spaced apart from each other between the anode and the cathode so as to form a flow path through which fresh water flows,
wherein the single cells each include a cation exchange membrane and an anion exchange membrane, which are spaced apart from each other so as to form a flow path through which sea water flows, wherein
the cation and anion exchange membranes comprise a porous polymer substrate and a polymer electrolyte incorporated into pores of the porous polymer substrate, and wherein the polymer electrolyte in the cation exchange membrane is formed by incorporating a solution including a styrene-based monomer preferably selected from one or more from the group consisting of alpha-methylstyrene, styrene and trifluorostyrene, vinylpyrrolidone, a crosslinking agent preferably selected from divinylbenzene, methylenebisacrylamide or tetramethylenebisacrylamide and an initiator preferably selected from N,N'-azobisisobutyronitrile (AIBN), benzoyl peroxide (BPO) or cumyl peroxide, into the porous polymer substrate and then performing crosslinking polymerization.

4. The reverse electrodialysis device according to any one of claims 1 - 3, wherein the polymer electrolyte in the anion exchange membrane is formed by incorporating a solution including an electrolyte monomer of a quaternary ammonium salt having a cationic group preferably selected from (3-acrylamidopropyl)trimethylammonium chloride or (vinylbenzyl)trimethylammonium chloride, a crosslinking agent preferably selected from (i) a bisacrylamide-based crosslinking agent, which is preferably one or more selected from the group consisting of N,N'-ethylenebisacrylamide, N,N'-methylenebisacrylamide, N,N'-methylenebismethacrylamide and N,N'-bisacryloylpiperazine or (ii) triazine substituted with a (meth)acryloyl group or an alkenyl group, preferably 1,3,5-triacryloylhexahydro-1,3,5-triazine, and an initiator into the porous polymer substrate and then performing crosslinking polymerization.

5. Use of a cation exchange membrane in a reverse electrodialysis (RED) device, which cation exchange membrane comprises:
a porous polymer substrate; and
a polymer electrolyte incorporated into pores of the porous polymer substrate, wherein the polymer electrolyte is formed by incorporating a solution including a crosslinkable aromatic polymer represented by Chemical Formula 1 below, a monomer having an aliphatic or aromatic ring with a vinyl group linked thereto preferably selected from a vinylpyrrolidone monomer, a styrene monomer or a divinylbenzene monomer, and an initiator into the porous polymer substrate and then performing crosslinking polymerization: 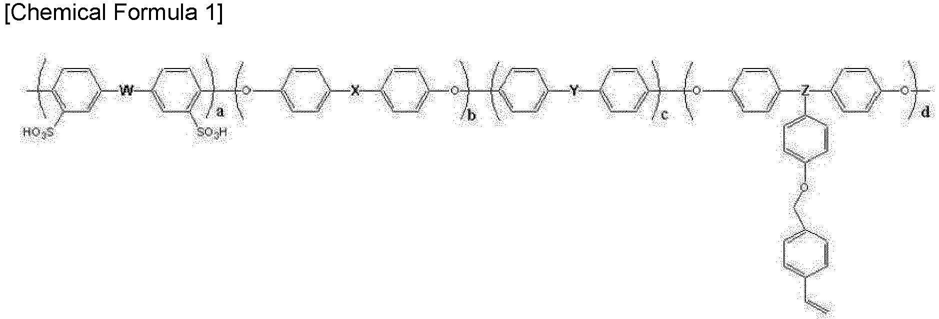 wherein W, X and Y are each independently one or more selected from among SO₂, CO₂, CH₃-CH₂-CH₃, CF₃-CF₂-CF₃ and S, Z is any one selected from among C-CH₃, C-CF₃ and C-H, and a + c = b + d.

6. Use of a cation exchange membrane in a reverse electrodialysis (RED) device, which cation exchange membrane comprises:
a porous polymer substrate; and
a polymer electrolyte incorporated into pores of the porous polymer substrate, wherein the polymer electrolyte is formed by incorporating a solution including a crosslinkable aromatic polymer represented by Chemical Formula 2 below into the porous polymer substrate and then performing crosslinking polymerization: 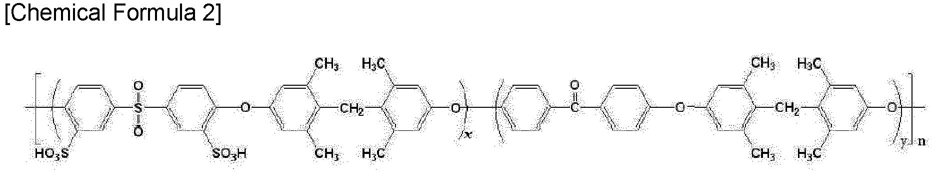 wherein x and y are greater than 0, x + y = 1, and n is an integer of 1 or more.

7. Use of a cation exchange membrane for a reverse electrodialysis (RED) device, which cation exchange membrane comprises:
a porous polymer substrate; and
a polymer electrolyte incorporated into pores of the porous polymer substrate, wherein the polymer electrolyte is formed by incorporating a solution including a styrene-based monomer preferably selected from one or more from the group consisting of alpha-methylstyrene, styrene and trifluorostyrene, vinylpyrrolidone, a crosslinking agent preferably selected from divinylbenzene, methylenebisacrylamide or tetramethylenebisacrylamide and an initiator preferably selected from N,N'-azobisisobutyronitrile (AIBN), benzoyl peroxide (BPO) or cumyl peroxide, into the porous polymer substrate and then performing crosslinking polymerization.

## Patentansprüche

1. Vorrichtung zur umgekehrten Elektrodialyse, umfassend:
eine Anode;
eine Kathode; und
eine oder mehrere Einzelzellen, die zwischen der Anode und der Kathode so voneinander beabstandet sind, dass sie einen Strömungspfad bilden, durch den Frischwasser fließt,
wobei die einzelnen Zellen jeweils eine Kationenaustauschmembran und eine Anionenaustauschmembran enthalten, die so voneinander beabstandet sind, dass sie einen Strömungspfad bilden, durch den Meerwasser fließt,
wobei die Kationen- und Anionenaustauschmembranen ein poröses Polymersubstrat und ein Polymerelektrolyt umfassen, das in die Poren des porösen Polymersubstrats eingebaut ist, wobei das Polymerelektrolyt in der Kationenaustauschmembran gebildet wird, indem eine Lösung, die ein vernetzbares aromatisches Polymer, dargestellt durch die nachstehende chemische Formel 1, ein Monomer mit einem aliphatischen oder aromatischen Ring mit einer daran gebundenen Vinylgruppe, vorzugsweise ausgewählt aus einem Vinylpyrrolidon-Monomer, einem Styrol-Monomer oder einem Divinylbenzol-Monomer, und einen Initiator enthält, in das poröse Polymersubstrat eingebaut wird und dann eine vernetzende Polymerisation durchgeführt wird: 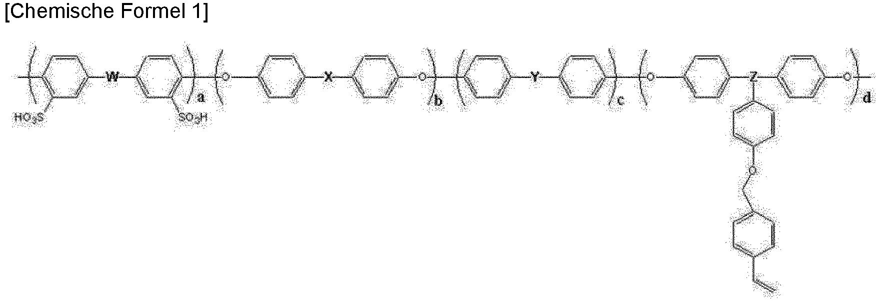 wobei W, X und Y jeweils unabhängig voneinander eines oder mehrere ausgewählt aus SO₂, CO₂, CH₃-CH₂-CH₃, CF₃-CF₂-CF₃ und S sind, Z eines ausgewählt aus C-CH₃, C-CF₃ und C-H ist, und a + c = b + d.

2. Vorrichtung zur umgekehrten Elektrodialyse, umfassend:
eine Anode;
eine Kathode; und
eine oder mehrere Einzelzellen, die zwischen der Anode und der Kathode so voneinander beabstandet sind, dass sie einen Strömungspfad bilden, durch den Frischwasser fließt,
wobei die einzelnen Zellen jeweils eine Kationenaustauschmembran und eine Anionenaustauschmembran enthalten, die so voneinander beabstandet sind, dass sie einen Strömungspfad bilden, durch den Meerwasser fließt,
wobei die Kationen- und Anionenaustauschmembranen ein poröses Polymersubstrat und ein Polymerelektrolyt umfassen, das in die Poren des porösen Polymersubstrats eingebaut ist, wobei das Polymerelektrolyt in der Kationenaustauschmembran gebildet wird, indem eine Lösung, die ein vernetzbares aromatisches Polymer, dargestellt durch die nachstehende chemische Formel 2, enthält, in das poröse Polymersubstrat eingearbeitet wird und dann eine vernetzende Polymerisation durchgeführt wird: 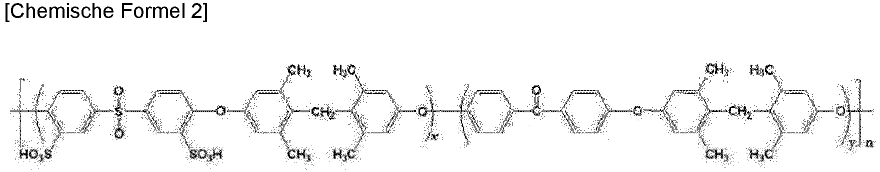 wobei x und y größer als 0 sind, x + y = 1, und n eine ganze Zahl von 1 oder mehr ist.

3. Vorrichtung zur umgekehrten Elektrodialyse, umfassend:
eine Anode;
eine Kathode; und
eine oder mehrere Einzelzellen, die zwischen der Anode und der Kathode so voneinander beabstandet sind, dass sie einen Strömungspfad bilden, durch den Frischwasser fließt,
wobei die einzelnen Zellen jeweils eine Kationenaustauschmembran und eine Anionenaustauschmembran enthalten, die so voneinander beabstandet sind, dass sie einen Strömungspfad bilden, durch den Meerwasser fließt,
wobei die Kationen- und Anionenaustauschmembranen ein poröses Polymersubstrat und ein Polymerelektrolyt umfassen, das in die Poren des porösen Polymersubstrats eingebaut ist, wobei das Polymerelektrolyt in der Kationenaustauschmembran gebildet wird, indem eine Lösung, die ein Monomer auf Styrolbasis, vorzugsweise ausgewählt aus einem oder mehreren aus der Gruppe bestehend aus alpha-Methylstyrol, Styrol und Trifluorstyrol, Vinylpyrrolidon, ein Vernetzungsmittel, vorzugsweise ausgewählt aus Divinylbenzol, Methylenbisacrylamid oder Tetramethylenbisacrylamid, und einen Initiator, vorzugsweise ausgewählt aus N,N'-Azobisisobutyronitril (AIBN), Benzoylperoxid (BPO) oder Cumylperoxid, enthält, in das poröse Polymersubstrat eingearbeitet wird und dann eine vernetzende Polymerisation durchgeführt wird.

4. Vorrichtung zur umgekehrten Elektrodialyse nach einem der Ansprüche 1-3, wobei das Polymerelektrolyt in der Anionenaustauschermembran gebildet wird, indem eine Lösung, die ein Elektrolytmonomer eines quaternären Ammoniumsalzes mit einer kationischen Gruppe, vorzugsweise ausgewählt aus (3-Acrylamidopropyl)trimethylammoniumchlorid oder (Vinylbenzyl)trimethylammoniumchlorid, ein Vernetzungsmittel, vorzugsweise ausgewählt aus (i) einem Vernetzungsmittel auf Bisacrylamidbasis, das vorzugsweise eines oder mehrere aus der Gruppe bestehend aus N,N'-Ethylenbisacrylamid, N,N'-Methylenbisacrylamid, N,N'-Methylenbismethacrylamid und N,N'-Bisacryloylpiperazin ist, oder (ii) Triazin, das mit einer (Meth)Acryloylgruppe oder einer Alkenylgruppe substituiert ist, vorzugsweise 1,3,5-Triacryloylhexahydro-1,3,5-triazin, und einen Initiator enthält, in das poröse Polymersubstrat eingearbeitet wird und dann eine vernetzende Polymerisation durchgeführt wird.

5. Verwendung einer Kationenaustauschmembran in einer Vorrichtung zur umgekehrten Elektrodialyse (RED = reverse electrodialysis device), wobei die Kationenaustauschmembran umfasst:
ein poröses Polymersubstrat, und
ein Polymerelektrolyt, das in die Poren des porösen Polymersubstrats eingebaut ist, wobei das Polymerelektrolyt gebildet wird, indem eine Lösung, die ein vernetzbares aromatisches Polymer, dargestellt durch die nachstehende chemische Formel 1, ein Monomer mit einem aliphatischen oder aromatischen Ring mit einer daran gebundenen Vinylgruppe, vorzugsweise ausgewählt aus einem Vinylpyrrolidon-Monomer, einem Styrol-Monomer oder einem Divinylbenzol-Monomer, und einen Initiator enthält, in das poröse Polymersubstrat eingebaut wird und dann eine vernetzende Polymerisation durchgeführt wird: 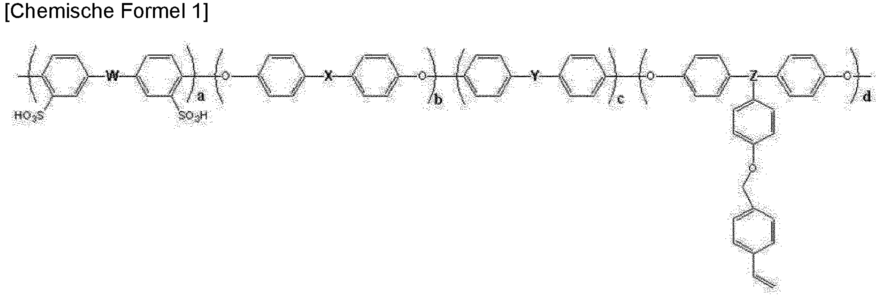 wobei W, X und Y jeweils unabhängig voneinander eines oder mehrere ausgewählt aus SO₂, CO₂, CH₃-CH₂-CH₃, CF₃-CF₂-CF₃ und S sind, Z eines ausgewählt aus C-CH₃, C-CF₃ und C-H ist, und a + c = b + d.

6. Verwendung einer Kationenaustauschmembran in einer Vorrichtung zur umgekehrten Elektrodialyse (RED = reverse electrodialysis device), wobei die Kationenaustauschmembran umfasst:
ein poröses Polymersubstrat, und
ein Polymerelektrolyt, das in die Poren des porösen Polymersubstrats eingebaut ist, wobei das Polymerelektrolyt gebildet wird, indem eine Lösung, die ein vernetzbares aromatisches Polymer, dargestellt durch die nachstehende chemische Formel 2, enthält, in das poröse Polymersubstrat eingearbeitet wird und dann eine vernetzende Polymerisation durchgeführt wird: 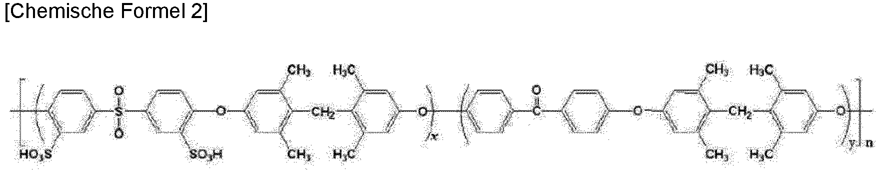 wobei x und y größer als 0 sind, x + y = 1, und n eine ganze Zahl von 1 oder mehr ist.

7. Verwendung einer Kationenaustauschmembran in einer Vorrichtung zur umgekehrten Elektrodialyse (RED = reverse electrodialysis device), wobei die Kationenaustauschmembran umfasst:
ein poröses Polymersubstrat, und
ein Polymerelektrolyt, das in die Poren des porösen Polymersubstrats eingebaut ist, wobei das Polymerelektrolyt gebildet wird, indem eine Lösung, die ein Monomer auf Styrolbasis, vorzugsweise ausgewählt aus einem oder mehreren aus der Gruppe bestehend aus alpha-Methylstyrol, Styrol und Trifluorstyrol, Vinylpyrrolidon, ein Vernetzungsmittel, vorzugsweise ausgewählt aus Divinylbenzol, Methylenbisacrylamid oder Tetramethylenbisacrylamid, und einen Initiator, vorzugsweise ausgewählt aus N,N'-Azobisisobutyronitril (AIBN), Benzoylperoxid (BPO) oder Cumylperoxid, enthält, in das poröse Polymersubstrat eingearbeitet wird und dann eine vernetzende Polymerisation durchgeführt wird.

## Revendications

1. Dispositif d'électrodialyse inverse, comprenant:
une anode;
une cathode; et
une ou plusieurs cellules individuelles espacées l'une de l'autre entre l'anode et la cathode de manière à former un trajet d'écoulement à travers lequel s'écoule de l'eau fraîche,
dans lequel les cellules individuelles comprennent chacune une membrane échangeuse de cations et une membrane échangeuse d'anions, qui sont espacées l'une de l'autre de manière à former un trajet d'écoulement à travers lequel s'écoule de l'eau de mer, dans lequel
les membranes échangeuses de cations et d'anions comprennent un substrat polymère poreux et un électrolyte polymère incorporé dans des pores du substrat polymère poreux, et dans lequel l'électrolyte polymère dans la membrane échangeuse de cations est formé en incorporant une solution comprenant un polymère aromatique réticulable représenté par la Formule Chimique 1 ci-dessous, un monomère ayant un cycle aromatique aliphatique avec un groupe vinyle y étant lié préférablement choisi parmi un monomère de vinylpyrrolidone, un monomère de styrène ou un monomère de divinylbenzène, et un initiateur, dans le substrat polymère poreux et ensuite effectuer une polymérisation de réticulation: 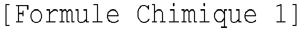 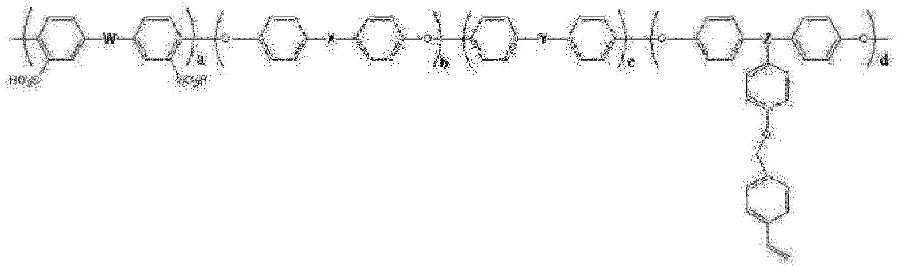 où W, X et Y sont chacun indépendamment un ou plusieurs choisis parmi SO₂, CO₂, CH₃-CH₂-CH₃, CF₃-CF₂-CF₃ et S, Z est l'un quelconque choisi parmi C-CH₃, C-CF₃ et C-H, et a + c = b + d.

2. Dispositif d'électrodialyse inverse, comprenant:
une anode;
une cathode; et
une ou plusieurs cellules individuelles espacées l'une de l'autre entre l'anode et la cathode de manière à former un trajet d'écoulement à travers lequel s'écoule de l'eau fraîche,
dans lequel les cellules individuelles comprennent chacune une membrane échangeuse de cations et une membrane échangeuse d'anions, qui sont espacées l'une de l'autre de manière à former un trajet d'écoulement à travers lequel s'écoule de l'eau de mer, dans lequel
les membranes échangeuses de cations et d'anions comprennent un substrat polymère poreux et un électrolyte polymère incorporé dans des pores du substrat polymère poreux, et dans lequel l'électrolyte polymère dans la membrane échangeuse de cations est formé en incorporant une solution comprenant un polymère aromatique réticulable représenté par la Formule Chimique 2 ci-dessous dans le substrat polymère poreux et ensuite effectuer une polymérisation de réticulation: 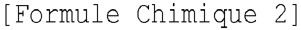 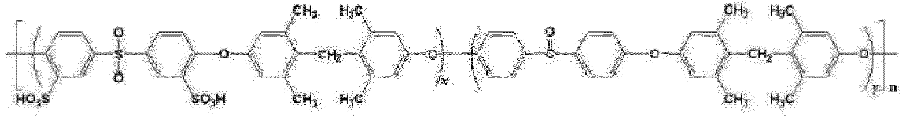 où x et y sont supérieurs à 0, x + y = 1 et n est un entier supérieur ou égal à 1.

3. Dispositif d'électrodialyse inverse, comprenant:
une anode;
une cathode; et
une ou plusieurs cellules individuelles espacées l'une de l'autre entre l'anode et la cathode de manière à former un trajet d'écoulement à travers lequel s'écoule de l'eau fraîche,
dans lequel les cellules individuelles comprennent chacune une membrane échangeuse de cations et une membrane échangeuse d'anions, qui sont espacées l'une de l'autre de manière à former un trajet d'écoulement à travers lequel s'écoule de l'eau de mer, dans lequel
les membranes échangeuses de cations et d'anions comprennent un substrat polymère poreux et un électrolyte polymère incorporé dans des pores du substrat polymère poreux, et dans lequel l'électrolyte polymère dans la membrane échangeuse de cations est formé en incorporant une solution comprenant un monomère à base de styrène choisi de préférence parmi un ou plusieurs dans le groupe constitué de l'alpha-méthylstyrène, le styrène et le trifluorostyrène, la vinylpyrrolidone, un agent de réticulation choisi de préférence parmi le divinylbenzène, le méthylènebisacrylamide ou le tétraméthylènebisacrylamide et un initiateur choisi de préférence parmi le N,N'-azobisisobutyronitrile (AIBN), le peroxyde de benzoyle (BPO) ou le péroxyde de cumyl, dans le substrat polymère et ensuite effectuer une polymérisation par réticulation.

4. Le dispositif d'électrodialyse inverse selon l'une quelconque des revendications 1 à 3, dans lequel l'électrolyte polymère dans la membrane échangeuse d'anions est formée en incorporant une solution comprenant un monomère électrolyte d'un sel d'ammonium quaternaire ayant un groupe cationique de préférence choisi parmi le chlorure de (3-acrylamidopropyl) triméthylammonium ou le chlorure de (vinylbenzyl) triméthylammonium, un agent de réticulation choisi de préférence parmi (i) un agent de réticulation à base de bisacrylamide, qui est de préférence un ou plusieurs choisis dans le groupe consistant en N,N'-éthylènebisacrylamide, N,N'-méthylènebisacrylamide, N,N'-méthylènebisméthacrylamide et N,N'-bisacryloylpipérazine, ou (ii) la triazine substituée par un groupe (méth)acryloyle ou un groupe alcényle, de préférence la 1,3,5-triacryloylhexahydro-1,3,5-triazine, et un initiateur dans le substrat polymère poreux, et ensuite effectuer une polymérisation par réticulation.

5. Utilisation d'une membrane échangeuse de cations dans un dispositif d'électrodialyse inverse (RED), laquelle membrane échangeuse de cations comprend :
un substrat polymère poreux ; et
un électrolyte polymère incorporé dans des pores du substrat polymère poreux, dans lequel l'électrolyte polymère est formé en incorporant une solution comprenant un polymère aromatique réticulable représenté par la Formule Chimique 1 ci-dessous, un monomère ayant un cycle aliphatique ou aromatique avec un groupe vinyle y étant lié préférablement choisi parmi un monomère de vinylpyrrolidone, un monomère de styrène ou un monomère de divinylbenzène, et un initiateur, dans le substrat polymère poreux et ensuite effectuer une polymérisation de réticulation: 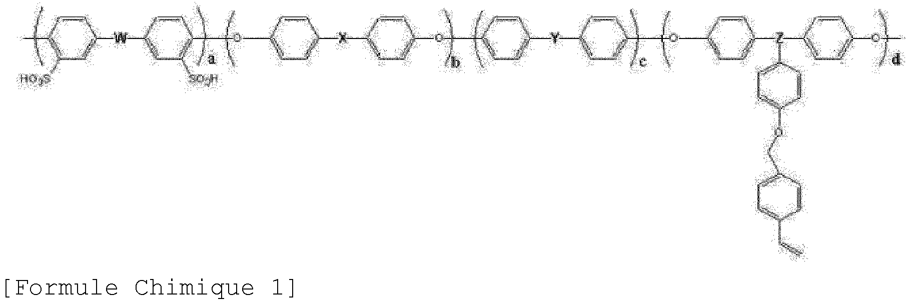 où W, X et Y sont chacun indépendamment un ou plusieurs choisis parmi SO₂, CO₂, CH₃-CH₂-CH₃, CF₃-CF₂-CF₃ et S, Z est l'un quelconque choisi parmi C-CH₃, C-CF₃ et C-H, et a + c = b + d.

6. Utilisation d'une membrane échangeuse de cations dans un dispositif d'électrodialyse inverse (RED), laquelle membrane échangeuse de cations comprend :
un substrat polymère poreux ; et
un électrolyte polymère incorporé dans des pores du substrat polymère poreux, dans lequel l'électrolyte polymère est formé en incorporant une solution comprenant un polymère aromatique réticulable représenté par la Formule Chimique 2 ci-dessous dans le substrat polymère poreux et ensuite effectuer une polymérisation de réticulation: 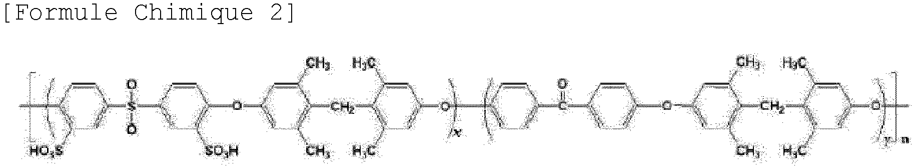 où x et y sont supérieurs à 0, x + y = 1 et n est un entier supérieur ou égal à 1.

7. Utilisation d'une membrane échangeuse de cations dans un dispositif d'électrodialyse inverse (RED), laquelle membrane échangeuse de cations comprend :
un substrat polymère poreux ; et
un électrolyte polymère incorporé dans des pores du substrat polymère poreux, dans lequel l'électrolyte polymère est formé en incorporant une solution comprenant un monomère à base de styrène choisi de préférence parmi un ou plusieurs dans le groupe constitué de l'alpha-méthylstyrène, le styrène et le trifluorostyrène, la vinylpyrrolidone, un agent de réticulation choisi de préférence parmi le divinylbenzène, le méthylènebisacrylamide ou le tétraméthylènebisacrylamide et un initiateur choisi de préférence parmi le N,N'-azobisisobutyronitrile (AIBN), le peroxyde de benzoyle (BPO) ou le péroxyde de cumyl, dans le substrat polymère et ensuite effectuer une polymérisation par réticulation.
